# FASCICULE DE BREVET EUROPEEN

(11) **EP 2 357 783 B1**
(45) Date de publication et mention de la délivrance du brevet: **05.06.2013**
(21) Numéro de dépôt: 10305155.3
(22) Date de dépôt: 16.02.2010
(51) Int. Cl.: H04N 5/00, H04N 7/167, G06F 21/00, H04L 9/08, H04N 21/4623, H04N 21/418, H04N 21/443, H04N 21/442

(54) **Procédé de détection d'un fonctionnement potentiellement suspect d'un dispositif électronique et dispositif électronique correspondant.**
Verfahren zur Erkennung eines potentiell suspekten Betriebs eines elektronischen Geräts, und entsprechendes elektronisches Gerät
Method for detecting potentially suspicious operation of an electronic device and corresponding electronic device

(43) Date de publication de la demande: 17.08.2011
(73) Titulaire: STMicroelectronics (Rousset) SAS, 13790 Rousset (FR); STMicroelectronics N.V., 1118 BH Schiphol Airport Amsterdam (NL)
(72) Inventeur: Bildgen, Marco, 74420, HABERE-POCHE (FR); Devin, Jean, 13100, LE THOLONET (FR)
(74) Mandataire: Zapalowicz, Francis

(56) Documents cités:
- EP-A1- 1 447 976
- EP-A1- 1 575 293
- EP-A1- 1 742 474
- WO-A1-03/092264
- FR-A1- 2 907 930
- FRANCIS ET AL: "Countermeasures for attacks on satellite TV cards using open receivers" AUSTRALASIAN INFORMATION SECURITY WORKSHOP.: DIGITAL RIGHTSMANAGEMENT, XX, XX, 6 novembre 2004 (2004-11-06), pages 1-6, XP002333719

## Description

L'invention concerne les dispositifs électroniques, en particulier les cartes à microcircuit ou cartes à puce, et notamment la détection d'un fonctionnement potentiellement suspect d'un tel dispositif électronique.

L'invention s'applique avantageusement mais non limitativement aux systèmes de télévision payantes et plus particulièrement à la détection d'un « partage de cartes », communément désignée par l'homme du métier sous le vocable anglo-saxon de « card sharing » permettant à plusieurs utilisateurs de regarder des chaînes de télévision payantes en utilisant qu'une seule carte à puce autorisée.

Les dispositifs électroniques, en particulier les cartes à puces, et les systèmes utilisant de tels dispositifs électroniques peuvent être soumis à des attaques visant notamment à les détourner de leur utilisation normale et/ou à détecter une partie au moins de leur contenu mémorisé.

Selon un mode de mise en oeuvre et de réalisation, il est par conséquent proposé de pouvoir détecter, de façon particulièrement simple, un fonctionnement potentiellement suspect d'un dispositif électronique.

Il est également proposé, en particulier, que cette détection soit effectuée au sein même du dispositif, c'est-à-dire que le dispositif puisse détecter de lui-même, un fonctionnement potentiellement suspect.

Selon un aspect, il est ainsi proposé un procédé de détection d'un fonctionnement potentiellement suspect d'un dispositif électronique configuré pour fonctionner au cours de sessions d'activité, le procédé comportant, au sein du dispositif, une comptabilisation, à partir d'un instant initial, du nombre de sessions d'activité ayant une durée inférieure à un premier seuil, et une comparaison de ce nombre avec un deuxième seuil.

Les inventeurs ont en effet observé qu'un nombre anormalement élevé de sessions d'activité relativement courtes pouvait être, dans la majorité des cas, révélateur d'un fonctionnement potentiellement suspect du dispositif électronique.

Cela peut être le cas pour des cartes à microcircuit ou cartes à puce utilisables dans les systèmes de télévision payante soumis à des attaques du type « card sharing », ou bien encore lors d'attaques d'une carte à puce par injection de fautes.

Selon un mode de mise en oeuvre, le dispositif étant configuré pour fonctionner dans un premier mode de fonctionnement, typiquement un mode de fonctionnement normal, au cours desdites sessions d'activité, le procédé comporte un passage du dispositif dans au moins un deuxième mode de fonctionnement différent du premier mode de fonctionnement si ledit nombre de sessions est supérieur à un deuxième seuil.

Ce deuxième mode de fonctionnement peut être un mode fonctionnement dégradé dans lequel les performances du dispositif sont altérées.

Le premier seuil temporel, fixant la durée des sessions d'activité, ainsi que le deuxième seuil fixant le nombre de sessions d'activité ayant une durée inférieure au premier seuil, dépendent bien entendu des applications et l'homme du métier saura les choisir en fonction des applications envisagées.

Cela étant, à titre indicatif et non limitatif, dans une application de télévision payante, on peut choisir un premier seuil égal à une minute et un deuxième seuil de l'ordre de la centaine.

Selon un mode de mise en oeuvre, ladite comptabilisation du nombre de sessions d'activité ayant une durée inférieure au premier seuil comporte :
- lors de l'occurrence d'une session d'activité courante à ou après ledit instant initial,
   a) une attribution d'une première valeur à un indicateur binaire, par exemple la valeur logique 1, et,
   b) si ladite session d'activité courante a une durée supérieure ou égale au premier seuil, le maintien de la première valeur pour ledit indicateur binaire au cours de ladite session d'activité courante pendant une durée égale au premier seuil puis l'attribution d'une deuxième valeur, par exemple la valeur logique 0, audit indicateur binaire, et, si ladite session d'activité courante a une durée inférieure au premier seuil, le maintien de la première valeur pour ledit indicateur binaire après la fin de la session d'activité courante et au moins jusqu'à l'occurrence de la session d'activité suivante,
- lors de l'occurrence de la session d'activité suivante et en présence dudit indicateur binaire ayant ladite première valeur, une attribution de la première valeur à un nouvel indicateur binaire de rang supérieur au rang dudit indicateur binaire, et
- une détermination du nombre d'indicateurs binaires ayant ladite première valeur.

Selon un mode de mise en oeuvre, lors de l'occurrence de ladite session d'activité suivante et en présence dudit indicateur binaire ayant la deuxième valeur, c'est-à-dire la valeur logique 0, ladite comptabilisation met alors en oeuvre l'étape a) et l'étape b) pour l'indicateur binaire de rang le plus petit et ayant la deuxième valeur.

En d'autres termes, lorsque la dernière session d'activité a une durée supérieure au seuil, on recommence l'étape a) et l'étape b) avec l'indicateur binaire le plus ancien qui a la deuxième valeur logique, par exemple la valeur 0. Cet indicateur binaire le plus ancien peut être le même indicateur binaire que précédemment, ou bien un indicateur plus ancien.

Par ailleurs, lorsque la durée d'une session d'activité courante est inférieure au premier seuil, on maintient de préférence l'indicateur binaire considéré à sa première valeur pendant une durée de maintien choisie. Ainsi, par exemple, lorsque la première valeur a été attribuée à deux indicateurs binaires de rangs successifs, on maintient l'indicateur binaire de rang le plus faible à sa première valeur pendant une durée de maintien expirant à l'issue d'une durée résiduelle après que l'autre indicateur binaire a repris la deuxième valeur.

Cette durée résiduelle peut être par exemple égale elle-même au premier seuil.

Ceci permet de dissuader davantage des attaquants potentiels. En effet, si une centaine d'indicateurs binaires ayant la première valeur logique, par exemple la valeur 1, ont été détectés, il faudra attendre une durée égale à 100 fois le premier seuil, c'est-à-dire par exemple 100 minutes avant que tous les indicateurs binaires ne retombent à la deuxième valeur logique.

Généralement, chaque session d'activité débute par l'occurrence d'un signal d'initialisation du dispositif, signal d'initialisation communément désigné par l'homme du métier sous le vocable anglo-saxon de « reset ». Ce signal d'initialisation est généralement suivi d'une séquence d'amorçage ou de transition précédant une séquence de travail, ou séquence opérationnelle. Cette séquence d'amorçage est par exemple une séquence de « boot » c'est-à-dire une séquence initiale permettant de lancer des exécutions d'instructions qui entraînent le chargement de programmes, l'initialisation de certaines zones et la mise en service de périphériques éventuels.

Et, dans le deuxième mode de fonctionnement, on force alors la durée de la séquence d'amorçage à une valeur supérieure à celle de la séquence d'amorçage dans le premier mode de fonctionnement.

En d'autres termes, dans ce mode de fonctionnement dégradé, le dispositif va donc devoir attendre plus longtemps avant d'être opérationnel lorsqu'un comportement potentiellement suspect a été détecté.

On peut éventuellement augmenter la durée de chaque nouvelle séquence d'amorçage au fur et à mesure de l'augmentation, au-delà du deuxième seuil du nombre d'indicateurs ayant ladite première valeur.

Ainsi dans ce cas, plus le nombre d'indicateurs binaires ayant la valeur logique 1 est important, plus la durée de la séquence d'amorçage après chaque nouveau signal d'initialisation, sera importante ce qui va permettre *in fine* d'avoir un dispositif avec des performances totalement dégradées le rendant totalement inefficace pour l'application pour lequel il est prévu.

De façon à pouvoir conserver le nombre de sessions d'activité ayant une durée inférieure au premier seuil même en présence des signaux d'initialisation, il est avantageusement prévu de stocker ces indicateurs binaires dans une mémoire non volatile, par exemple une mémoire non volatile du type électriquement programmable et effaçable (mémoire EEPROM).

Selon un autre aspect, il est proposé un dispositif électronique comportant des moyens de traitement configurés pour fonctionner au cours de sessions d'activité ; selon une caractéristique générale de cet aspect, le dispositif comprend également
- des moyens de contrôle configurés pour comptabiliser à partir d'un instant initial, le nombre de sessions d'activité ayant une durée inférieure à un premier seuil,
- des moyens de stockage configurés pour stocker au moins une information représentative du nombre de sessions d'activité ayant une durée inférieure à un premier seuil, et
- des moyens de comparaison configurés pour comparer ledit nombre de sessions avec un deuxième seuil.

Selon un mode de réalisation, dans lequel les moyens de traitement sont configurés pour fonctionner dans un premier mode de fonctionnement au cours de sessions d'activité, le dispositif comprend en outre des moyens de commande configurés pour faire passer les moyens de traitement dans au moins un deuxième mode de fonctionnement différent du premier mode de fonctionnement si ledit nombre de sessions est supérieur au deuxième seuil.

Selon un mode de réalisation, les moyens de contrôle comportent :
des moyens de gestion configurés pour :
   lors de l'occurrence d'une session d'activité courante à ou après ledit instant initial,
      a) attribuer une première valeur à un indicateur binaire, et
      b) si ladite session d'activité courante a une durée supérieure ou égale au premier seuil, maintenir la première valeur pour ledit indicateur binaire au cours de ladite session d'activité courante pendant une durée égale au premier seuil puis attribuer une deuxième valeur audit indicateur binaire, et si ladite session d'activité courante a une durée inférieure au premier seuil, maintenir la première valeur pour ledit indicateur binaire après la fin de la session d'activité courante et au moins jusqu'à l'occurrence de la session d'activité suivante, et
   lors de l'occurrence de la session d'activité suivante en présence dudit indicateur binaire ayant ladite première valeur, attribuer la première valeur à un nouvel indicateur binaire de rang supérieur au rang dudit indicateur binaire ;
   ladite information comporte alors lesdits indicateurs binaires, et
   les moyens de contrôle comportent en outre des moyens de comptage configurés pour compter le nombre d'indicateurs binaires ayant ladite première valeur.

Selon un mode de réalisation, les moyens de gestion sont configurés pour, lors de l'occurrence de ladite session d'activité suivante et en présence dudit indicateur binaire ayant la deuxième valeur, mettre en oeuvre l'étape a) et l'étape b) pour l'indicateur binaire de rang le plus petit et ayant la deuxième valeur.

Selon un mode de réalisation, les moyens de gestion sont en outre configurés pour, lorsque la durée d'une session d'activité courante est inférieure au premier seuil, maintenir l'indicateur binaire considéré à sa première valeur pendant une durée de maintien choisie.

Selon un mode de réalisation, lorsque la première valeur a été attribuée à deux indicateurs binaires de rangs successifs, les moyens de gestion sont configurés pour maintenir l'indicateur binaire de rang le plus petit à sa première valeur pendant une durée de maintien expirant à l'issue d'une durée résiduelle après que l'autre indicateur binaire a repris la deuxième valeur.

Selon un mode de réalisation, chaque session d'activité débute par l'occurrence d'un signal d'initialisation du système et comporte une séquence d'amorçage précédant une séquence de travail, et dans lequel dans le deuxième mode de fonctionnement, les moyens de commande sont configurés pour forcer la durée de la séquence d'amorçage à une valeur supérieure à celle de la séquence d'amorçage dans le premier mode de fonctionnement.

Selon un mode de réalisation, les moyens de commande sont configurés pour augmenter la durée de chaque nouvelle séquence d'amorçage au fur et à mesure de l'augmentation, au-delà du deuxième seuil, du nombre d'indicateurs binaires ayant ladite première valeur.

Les moyens de stockage comportent de préférence une mémoire non volatile par exemple une mémoire non volatile électriquement programmable et effaçable.

Le dispositif peut être une carte à microcircuit, par exemple du type de celle destinée à être utilisée dans un système de télévision payante.

D'autres avantages et caractéristiques de l'invention apparaîtront à l'examen de la description détaillée de modes de mises en oeuvre et de réalisations, nullement limitatifs et des dessins annexés sur lesquels :
- la figure 1 illustre schématiquement un mode de réalisation d'un décodeur destiné à coopérer avec une carte à puce dans une application de télévision payante,
- la figure 2 illustre un exemple de flots de données vidéo dans une application de télévision payante,
- la figure 3 illustre schématiquement une configuration d'un système de télévision payante permettant une utilisation frauduleuse d'une carte à puce,
- les figures 4 à 5 illustrent des échanges de flots de données représentatifs d'un comportement potentiellement frauduleux de la carte à puce utilisable dans le système de la figure 3, et
- les figures 6 à 10 illustrent schématiquement des modes de mise en oeuvre et de réalisation d'un procédé et d'un dispositif selon l'invention permettant de détecter un comportement potentiellement suspect de ce même dispositif, par exemple la carte à puce utilisée dans le système de la figure 3.

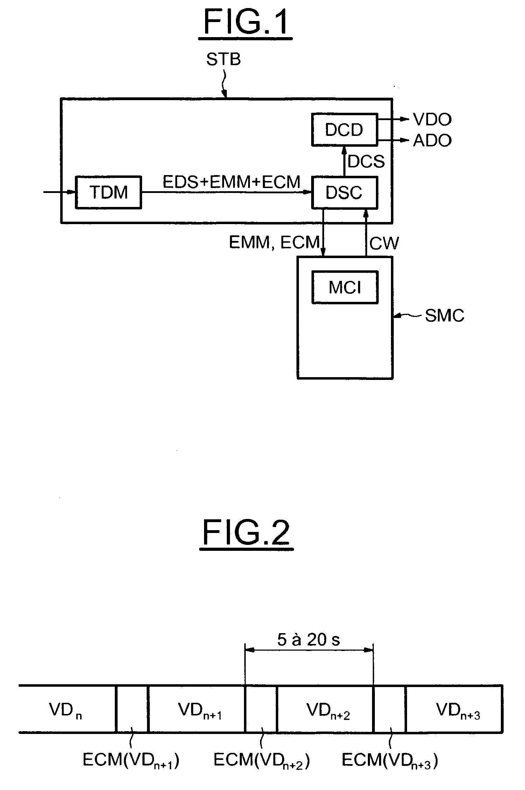

On va maintenant décrire, en se référant aux figures 1 à 10, une application de l'invention à un système de télévision payante (PAY-TV) bien que l'invention ne soit absolument pas limitée à ce type d'application.

Sur la figure 1, la référence STB désigne un décodeur ou « set top box » selon une dénomination anglo-saxonne bien connue de l'homme du métier.

La structure interne d'un tel décodeur est classique et connue en soi. Plus précisément, il comporte notamment un bloc TDM de syntonisation/démodulation recevant les données audio et vidéo transmises par l'opérateur et délivrant un flux de données encryptées EDS ainsi que des messages EMM et ECM qui sont respectivement des messages encryptés définissant les droits pour une ou plusieurs personnes ainsi que des messages encryptés contenant une clé ou mot de commande CW, afin de décrypter le flux audio vidéo.

La fréquence de fourniture des messages EMM dépend de l'opérateur.

Tout ce flux de données est reçu et traité par un bloc de traitement DSC comportant notamment un module de désembrouillage. Les messages EMM et ECM sont transmis à une carte à puce spécifique SMC communément désignée par l'homme du métier sous le vocable anglo-saxon de « Pay-TV smartcard », comportant un circuit intégré MCI incorporant notamment une mémoire non volatile, une mémoire vive et des moyens de traitement.

Les messages EMM représentatifs des droits de l'utilisateur de la carte sont stockés dans la mémoire non volatile.

Par ailleurs, les messages ECM sont temporairement stockés dans la mémoire vive pour être décryptés par les moyens de traitement de façon à extraire la clé correspondante CW.

Comme illustré sur la figure 2, le flux vidéo et audio est transmis par bloc. Chaque bloc contient des données audio et vidéo VDᵢ ainsi qu'au moins le message ECM contenant la clé CW associée au bloc considéré, et éventuellement les messages ECM destinés à des blocs suivants.

La crypto période de transmission des blocs est par exemple de l'ordre de 5 à 20 secondes.

Les clés CW sont délivrées au bloc de traitement DSC qui effectue le décryptage du flux vidéo et audio et transmet un flux décrypté et comprimé DCS à un bloc de décodage audio vidéo DCD qui transmet en sortie les informations vidéo VDO et audio ADO au téléviseur.

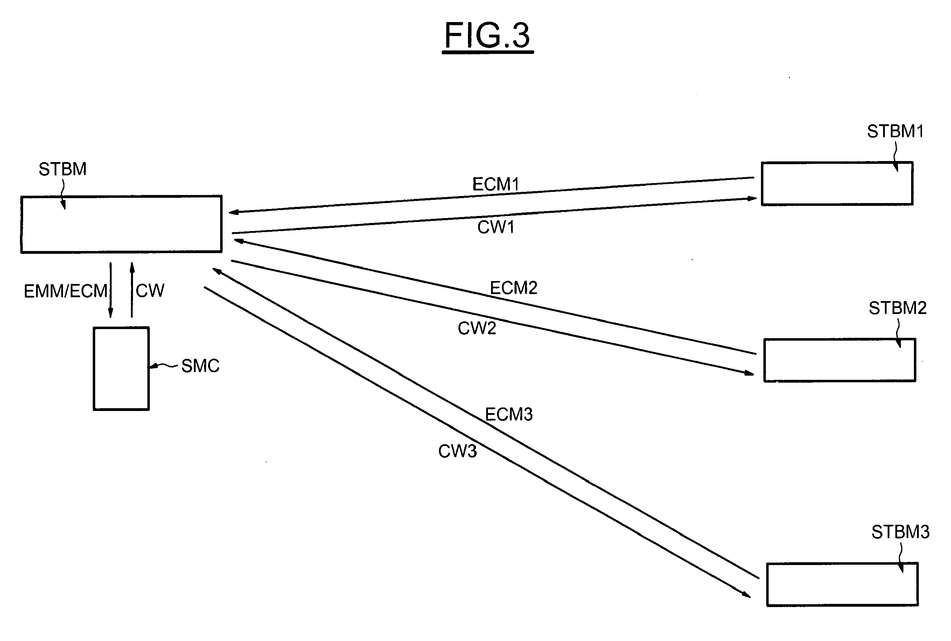

Une façon de détourner de son utilisation normale une carte à puce utilisable dans un système de télévision payante, consiste à effectuer du partage de carte ou « card sharing ». Un tel partage de carte est effectué à l'aide d'un système comportant plusieurs décodeurs modifiés STBM, STBM1, STBM2 et STBM3, et une seule carte à puce SMC, qui est une carte légitimement acquise (figure 3).

Un tel système modifié permet à plusieurs utilisateurs, ici quatre utilisateurs, de pouvoir regarder des programmes différents voire des programmes identiques, en utilisant une seule carte SMC et les droits associés à cette carte.

Plus précisément, l'un des décodeurs, par exemple le décodeur STBM, coopère avec la carte à puce SMC tandis que les autres décodeurs STBM1, STBM2 et STBM3 sont connectés au décodeur STBM, par exemple une liaison internet.

Ainsi, si l'on suppose dans cet exemple que la carte SMC contient des droits permettant de regarder au moins quatre canaux ou chaînes de télévisions différentes, l'utilisateur du décodeur STBM peut regarder un programme et les trois autres utilisateurs des décodeurs STBM1, STBM2 et STBM3 respectivement, peuvent regarder simultanément trois autres chaînes de télévisions, car les décodeurs ont été modifiés de façon qu'un dialogue puisse s'engager directement à partir des décodeurs STBMi avec la carte SMC de façon à permettre l'échange des messages ECMi et des clés correspondantes CWi de façon à permettre de visionner les programmes correspondants.

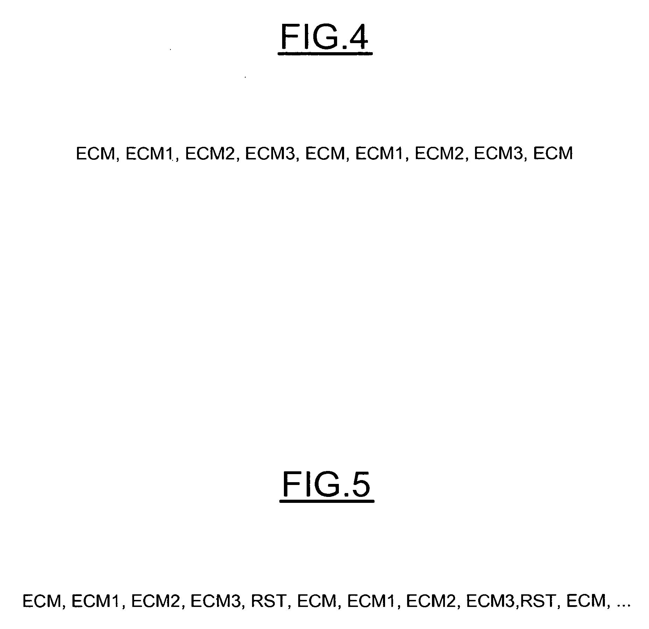

Cette utilisation frauduleuse de la carte SMC va par conséquent se traduire, comme illustré sur la figure 4 par des séquences répétitives identiques de messages ECM différents.

Un tel comportement est un comportement potentiellement frauduleux. Et il est connu, par exemple par l'article de Francis et autres, intitulé « Countermeasures for Attacks on Satellite TV Cards using Open Receivers » (Third Australasian Information Security Workshop 2005 (AISW2005)) qu'une observation temporelle du comportement de la carte à l'aide d'une mémoire, permet de détecter de tels comportements suspects dans le but de stopper une telle utilisation frauduleuse de la carte.

Le fait que les différents messages ECM reçus par la carte soient stockés temporairement dans la mémoire vive de la carte aux fins de leur traitement de décryptage par exemple, est compatible avec une telle observation temporelle du comportement de la carte.

Cela étant l'article précité enseigne également l'utilisation de réinitialisations de la carte par un fraudeur de façon à continuer à l'utiliser frauduleusement. En d'autres termes, comme illustré sur la figure 5, il serait possible de délivrer à la carte SMC, plus ou moins régulièrement, des signaux d'initialisation ou « reset » RST qui vont venir s'intercaler entre les différents messages ECM et par conséquent réinitialiser plus ou moins régulièrement le contenu de la mémoire vive ce qui va perturber l'observation temporelle du comportement de la carte.

Une solution pour continuer à offrir la possibilité d'observer temporellement le comportement de la carte consisterait à stocker les différents messages ECM reçus non pas dans une mémoire vive mais dans la mémoire non volatile, par exemple la mémoire EEPROM, de la carte.

Cela étant, compte tenu de la durée relativement courte de la crypto période (de l'ordre de 5 à 20 secondes), le stockage de tous les messages ECM et ECMi dans la mémoire non volatile de la carte, conduit à un nombre très élevé de cycles d'écriture dans la mémoire non volatile, ce qui risque d'altérer à court terme son fonctionnement.

Selon un aspect, l'invention prévoit donc, au lieu de stocker tous les messages ECM, ECMi échangés et d'effectuer des statistiques, de compter simplement le nombre de sessions d'activité (une session d'activité correspond à l'émission d'un signal d'initialisation RST qui reste par exemple à une valeur logique « 1 » pendant cette session d'activité) qui ont une durée inférieure à un premier seuil choisi, par exemple une minute, de stocker ce nombre préférentiellement dans la mémoire non volatile, de façon à pouvoir le conserver malgré l'émission des signaux d'initialisation, et de détecter si ce nombre de sessions courtes est supérieur à un deuxième seuil.

En effet, alors qu'il est généralement admis qu'un certain nombre de signaux d'initialisation puissent être émis pendant une certaine période, dans une utilisation normale de la carte SMC, un trop grand nombre de sessions d'activité courtes, c'est-à-dire un trop grand nombre de signaux d'initialisation émis pendant une période de temps réduite, est généralement synonyme d'un comportement potentiellement suspect de la carte.

Il est en effet rare qu'un utilisateur ayant régulièrement acquis des droits, passe son temps à commuter (« zapper » selon une dénomination anglosaxonne bien connue) entre quatre chaînes différentes de façon quasi régulière pendant un laps de temps important.

Une façon particulièrement simple quoique non limitative, de compter les sessions d'activité ayant des durées courtes, c'est-à-dire inférieures au premier seuil, prévoit l'utilisation d'indicateurs binaires ou sémaphores, qui vont être stockés dans la mémoire non volatile de la carte.

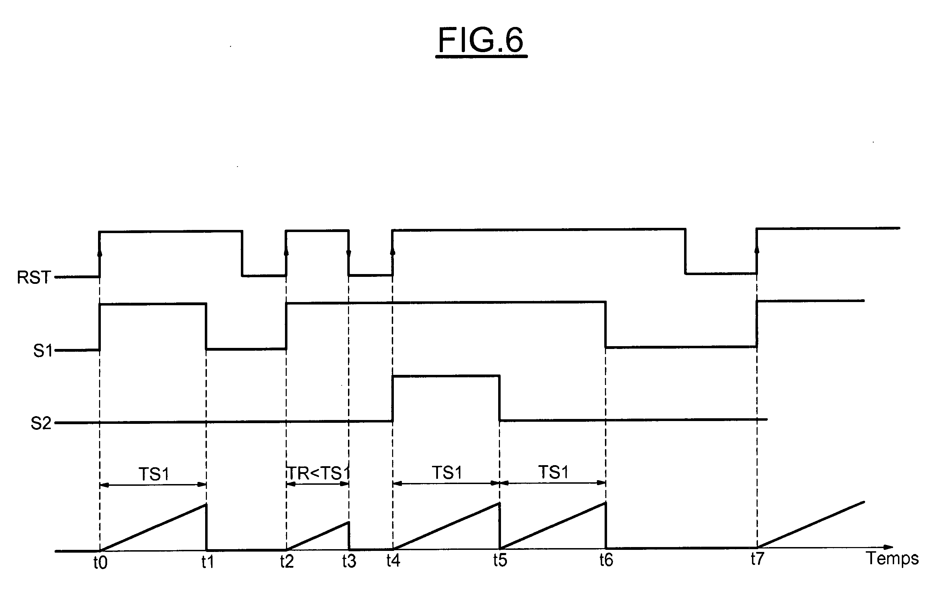

Plus précisément si l'on se réfère maintenant plus particulièrement à la figure 6, lors de l'occurrence d'une session d'activité courante, à ou après un instant initial (cet instant initial pouvant être l'instant marquant le début de la première session d'activité ou bien tout autre instant de référence à partir duquel on souhaite comptabiliser le nombre de sessions courtes) on attribue une première valeur, par exemple la valeur logique 1, à un indicateur binaire Si.

Ainsi, dans l'exemple de la figure 6, lors de l'occurrence de la première session d'activité à ou après l'instant initial, on affecte la valeur logique 1 à un premier indicateur binaire S1.

Si la session d'activité courante, en l'espèce la première session d'activité débutant à l'instant t0, a une durée supérieure ou égale au premier seuil TS1, ce qui est le cas ici on maintient l'indicateur binaire S1 à sa première valeur au cours de la session d'activité courant pendant une durée égale au premier seuil TS1 puis on attribue une deuxième valeur, en l'espèce la valeur logique 0, à l'indicateur binaire S1.

Par contre, si, comme c'est le cas pour la deuxième session d'activité, débutant à l'instant t2, celle-ci a une durée TR inférieure au premier seuil TS1, on maintient alors la première valeur, c'est-à-dire la valeur logique 1 pour l'indicateur binaire S1, et ce au moins jusqu'à l'occurrence de la session d'activité suivante, et de préférence après l'occurrence de cette session d'activité suivante, comme il sera expliqué plus en détail ci-après.

Et, à l'occurrence de la session d'activité suivante, c'est-à-dire ici celle commençant à l'instant t4, puisque l'indicateur binaire de rang 1 S1 a la valeur logique 1, on attribue alors de nouveau la première valeur logique, c'est-à-dire la valeur logique 1, à un nouvel indicateur binaire, c'est-à-dire un indicateur binaire de rang supérieur, en l'espèce de rang 2, S2.

Et, on applique à ce nouvel indicateur binaire S2 les mêmes règles que celles qui viennent d'être évoquées pour l'indicateur S1.

En d'autres termes, si cette nouvelle session d'activité courante a une durée supérieure à TS1, ce qui est le cas ici, on fait retomber la valeur du sémaphore S2 à 0 au bout de la durée TS1 tandis qu'on maintient cette valeur 1 dans le cas contraire, et ce au moins jusqu'à l'occurrence de la session d'activité suivante.

La détermination du nombre de sessions d'activité ayant une durée inférieure à TS1 revient alors à compter à un instant donné, le nombre de sémaphores ou indicateurs binaires ayant la valeur logique 1.

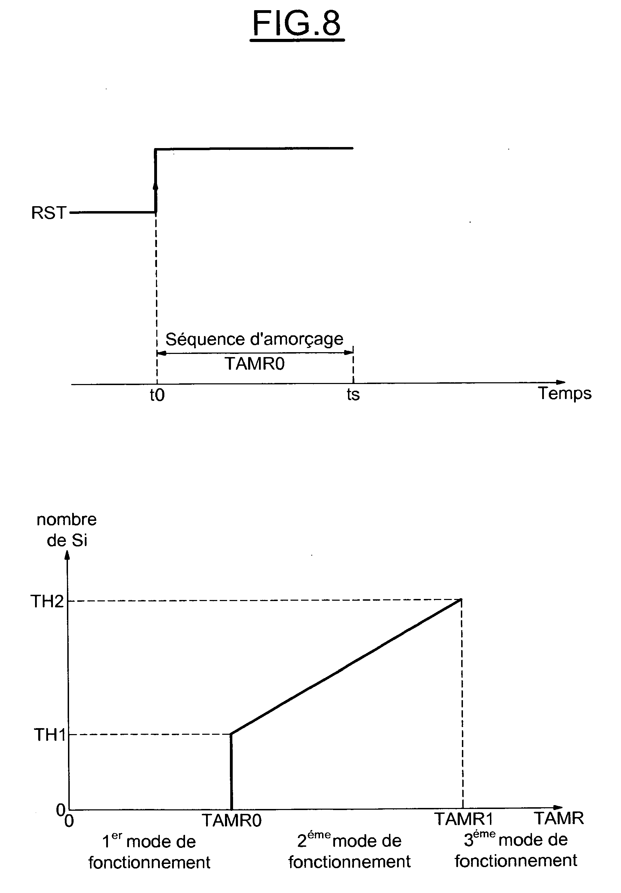

Et, si ce nombre est supérieur à un deuxième seuil TH1 (figure 8) on peut alors faire passer les moyens de traitement de la carte SMC dans un deuxième mode de fonctionnement différent du premier mode de fonctionnement normal de la carte. Ce deuxième mode de fonctionnement peut être un mode de fonctionnement dégradé comme il sera expliqué plus en détails ci-après.

On vient de voir que pour la session d'activité courante ayant débuté à l'instant t4, le sémaphore S2 a pris la valeur 1 pendant la durée TS1 puis est retombé à 0 puisque cette session d'activité a duré plus que la durée TS1.

Aussi, lors de l'occurrence de la session d'activité suivante, c'est-à-dire celle commençant à l'instant t7, on va appliquer les mêmes règles que celles qui viennent d'être décrites, pour l'indicateur de rang le plus petit et ayant la deuxième valeur, c'est-à-dire la valeur 0.

En l'espèce, lors de l'occurrence de la session d'activité suivante qui débute à l'instant t7, l'indicateur binaire de rang le plus petit et qui a la deuxième valeur 0, est l'indicateur de rang 1, c'est-à-dire l'indicateur S1.

Par conséquent, lors de l'occurrence de cette session d'activité suivante débutant à l'instant t7, on fait passer de nouveau l'indicateur S 1 à la valeur 1.

Lorsque la durée d'une session d'activité courante est inférieure au premier seuil TS1, on maintient l'indicateur binaire considéré à sa première valeur pendant une durée de maintien choisie au-delà de l'occurrence de la session d'activité suivante.

Et, plus particulièrement, lorsque la première valeur, c'est-à-dire la valeur 1, a été attribuée à deux indicateurs binaires de rangs successifs, par exemple les indicateurs S1 et S2, on maintient l'indicateur binaire de rang le plus faible, en l'espèce l'indicateur S1, à sa première valeur, c'est-à-dire la valeur logique 1, pendant une durée de maintien expirant à l'issue d'une durée résiduelle après que l'autre indicateur binaire, en l'espèce l'indicateur S2, a repris la deuxième valeur.

Cette durée résiduelle est, sur la figure 6, celle comprise entre les instants t5 et t6 et on voit que c'est seulement à l'instant t6 que l'indicateur binaire S1 reprend sa valeur 0.

Dans l'exemple qui est décrit ici, cette durée résiduelle peut être prise égale aussi au premier seuil TS1.

En d'autres termes, si la durée TS1 est de 1 minute, il faudra attendre 1 minute après que l'indicateur binaire S2 a repris sa valeur 0, pour que l'indicateur S1 reprenne lui-même sa valeur 0.

Une telle mesure renforce encore la capacité du dispositif à résister aux attaques visant à l'utiliser frauduleusement.

En effet, si un fraudeur s'aperçoit qu'après un certain nombre de signaux d'initialisation, la carte passe dans un mode de fonctionnement dégradé, il pourrait très bien juste avant que ce nombre soit atteint, attendre pendant une durée supérieure à la durée TS1 avant d'envoyer un nouveau signal d'initialisation.

La solution proposée ici rend inefficace une telle contre-mesure.

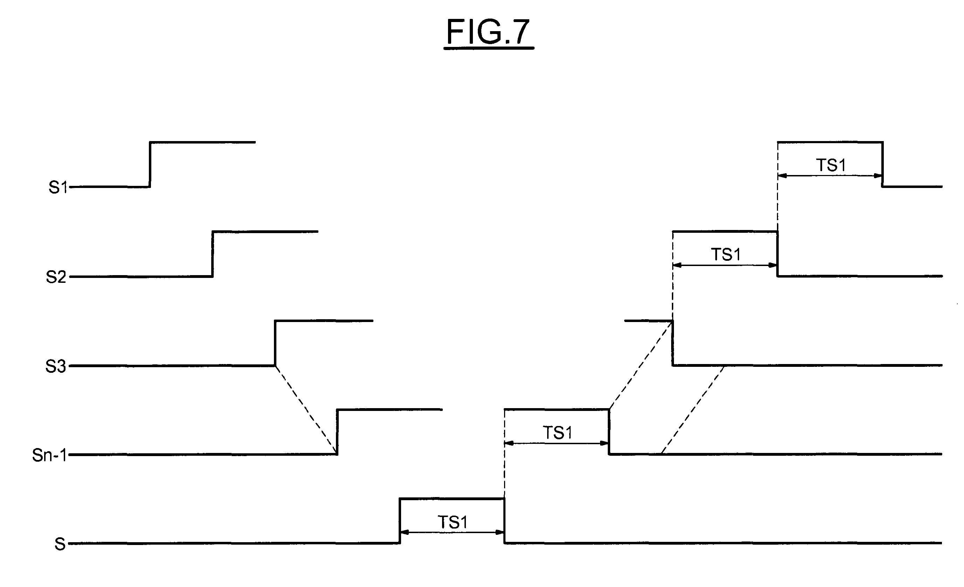

En effet, si comme illustré sur la figure 7, n sémaphore Si ont pris chacun la valeur logique 1, il faudra attendre une durée égale à n x TS1 pour que les n sémaphores reprennent leur valeur logique 0.

Si n est égal à 120, il faudra donc attendre 2 heures pour que l'ensemble des sémaphores aient repris la valeur logique 0 et que le compteur de sémaphores ait été remis à 0.

Généralement, comme illustré sur la partie haute de la figure 8, un dispositif électronique tel qu'une carte à puce, comporte, après la réception du signal d'initialisation RST, une séquence d'amorçage qui est une séquence transitoire précédant la séquence de travail effectif ou opérationnelle du dispositif.

Cette séquence d'amorçage peut être par exemple un programme d'amorçage ou « boot » selon une dénomination anglosaxonne bien connue de l'homme du métier.

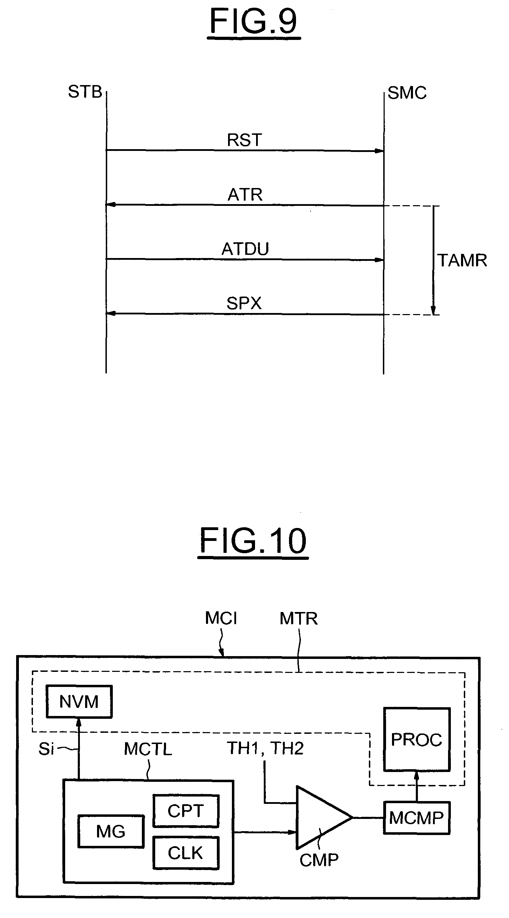

Dans une application de carte à puce utilisable dans un système de télévisions payante, la séquence d'amorçage ou séquence transitoire peut, comme illustrée sur la figure 9, être comprise entre l'émission par la carte SMC d'un signal d'accusé réception ATR du signal d'initialisation RST émis par le décodeur STB et l'émission par la carte SMC d'un signal SPX indiquant qu'elle est prête à exécuter des instructions de commande, ce signal SPX étant émis après la réception par la carte SMC d'un signal de commande spécifique APDU.

Cette séquence transitoire a une durée TAMR.

Si l'on revient maintenant à la figure 8, on voit que la durée normale d'une séquence d'amorçage lorsque la carte est dans son mode de fonctionnement normal (premier mode de fonctionnement) à une durée TAMRO.

Et, tant que le nombre de sémaphores reste inférieur au seuil TH1, la carte reste dans son premier mode de fonctionnement avec une séquence d'amorçage ayant toujours la durée TAMRO.

Par contre, dès que le nombre de sémaphores atteint la valeur seuil TH1, la carte passe dans un deuxième mode de fonctionnement, différent du premier mode de fonctionnement, et qui peut être un mode de fonctionnement dégradé.

A cet égard, une façon de dégrader le mode de fonctionnement prévoit d'augmenter la durée de la séquence d'amorçage et ce, par exemple, proportionnellement à une puissance entière du nombre de sémaphores ayant la valeur 1.

Ainsi, plus le nombre de sémaphores va augmenter au-delà du seuil TH1, plus la séquence d'amorçage sera longue, et plus la carte va mettre du temps à être opérationnelle, c'est-à-dire à rentrer dans la séquence de travail effective.

Et, bien entendu, notamment dans un système de télévision payante, ce temps de réaction de plus en plus long de la carte va empêcher de regarder les chaînes payantes dans de bonnes conditions de réception.

On peut également envisager qu'au-delà d'un autre seuil TH2, on fasse passer la carte dans un troisième mode de fonctionnement qui peut être par exemple un mode dans lequel la carte va se bloquer.

Un exemple de circuit intégré MCI d'un dispositif ou carte à puce, permettant de mettre en oeuvre le procédé qui vient d'être décrit, est illustré schématiquement sur la figure 10.

Le circuit intégré MCI de la carte comporte des moyens de traitement MTR incluant généralement un microcontrôleur PROC et, dans le cas présent une mémoire non volatile NVM destinée notamment à stocker les droits acquis par l'utilisateur de la carte et véhiculés par le message EMM.

Le circuit MCI comporte également des moyens de contrôle MCTL configurés pour comptabiliser, à partir dudit instant initial, le nombre de sessions d'activité ayant une durée inférieure au premier seuil TS1, et des moyens de comparaison CMP configurés pour comparer ce nombre de sessions avec le seuil TH1, et éventuellement comme indiqué précédemment avec un autre seuil TH2.

Des moyens de commande MCMP sont alors configurés pour faire passer les moyens de traitement MTR dans au moins un deuxième mode de fonctionnement différent du premier mode de fonctionnement si le nombre de sessions est supérieur au seuil TH1.

Les moyens de contrôle MCTL comportent des moyens de gestion MG configurés pour effectuer la gestion des sémaphores Si comme expliqué ci-avant.

Il est également prévu que les moyens de contrôle MCTL comprennent des moyens de comptage CPT pour compter le nombre d'indicateurs binaires Si ayant la première valeur, c'est-à-dire la valeur logique 1.

En outre, une base de temps CLK, fournie par un circuit classique et connu en soi, permet de mesurer le temps écoulé au cours de chaque session d'activité.

Certains de ces moyens, comme par exemple les moyens de gestion et les moyens de commande peuvent être réalisés de façon logicielle au sein de modules logiciels spécifiques et/ou par des circuits logiques. Par ailleurs, bien que les moyens de contrôle MCTL, les moyens de comparaison CMP et les moyens de commande MCMP aient été représentés sur la figure 10 à l'extérieur des moyens de traitement MTR, ceux-ci pourraient être réalisés au sein même des moyens de traitement, par exemple au sein même du micro contrôleur PROC.

L'invention, dans les modes de réalisation et de mise en oeuvre qui viennent d'être décrits, permet donc à un dispositif électronique, tel qu'une carte à puce, de pouvoir détecter lui-même un fonctionnement potentiellement suspect et de pouvoir prendre lui-même des mesures appropriées.

Cela étant, comme indiqué ci-avant, l'invention n'est pas limitée aux applications de télévisions payantes mais s'applique à tout dispositif électronique configuré pour fonctionner au cours de sessions d'activité comme c'est le cas pour les cartes à puce en général.

Ainsi, parmi les attaques possibles effectuées par des fraudeurs pour extraire des données confidentielles d'une mémoire, par exemple une mémoire protégée d'une carte à puce, on peut citer les attaques dites par injection de faute qui prévoient de perturber le fonctionnement et/ou le contenu de la mémoire, par exemple au moyen d'un rayonnement (laser, infrarouge, rayons X, etc...).

Et, ces injections de faute peuvent conduire à des réinitialisations de la carte. Ainsi, des réinitialisations répétitives dans un laps de temps relativement court, peuvent être synonymes de telles attaques d'injection de faute et la détection d'un tel comportement potentiellement suspect de la carte va permettre à celle-ci de passer dans un mode de fonctionnement dégradé avec éventuellement un blocage de la carte.

## Revendications

1. Procédé de détection d'un fonctionnement potentiellement suspect d'un dispositif électronique configuré pour fonctionner au cours de sessions d'activité débutant chacune par l'occurence d'un signal d'initialisation (RST) du dispositif, comportant au sein du dispositif, une comptabilisation, à partir d'un instant initial, du nombre de sessions d'activité ayant une durée inférieure à un premier seuil (TS1), et une comparaison de ce nombre avec un deuxième seuil (TH1).

2. Procédé selon la revendication 1, comportant en outre, le dispositif étant configuré pour fonctionner dans un premier mode de fonctionnement au cours desdites sessions d'activité, un passage du dispositif dans au moins un deuxième mode de fonctionnement différent du premier mode de fonctionnement si ledit nombre de sessions est supérieur à un deuxième seuil ((TH1).

3. Procédé selon la revendication 1 ou 2, dans lequel ladite comptabilisation comporte :
lors de l'occurrence d'une session d'activité courante à ou après ledit instant initial,
a) une attribution d'une première valeur à un indicateur binaire (Si), et
b) si ladite session d'activité courante a une durée supérieure ou égale au premier seuil (TS1), le maintien de la première valeur pour ledit indicateur binaire au cours de ladite session d'activité courante pendant une durée égale au premier seuil puis l'attribution d'une deuxième valeur audit indicateur binaire, et si ladite session d'activité courante a une durée inférieure au premier seuil (TS1), le maintien de la première valeur pour ledit indicateur binaire (Si) après la fin de la session d'activité courante et au moins jusqu'à l'occurrence de la session d'activité suivante,
lors de l'occurrence de la session d'activité suivante en présence dudit indicateur binaire (Si) ayant ladite première valeur, une attribution de la première valeur à un nouvel indicateur binaire (Si+1) de rang supérieur au rang dudit indicateur binaire, et
une détermination du nombre d'indicateurs binaires (Si) ayant ladite première valeur.

4. Procédé selon la revendication 3, dans lequel ladite comptabilisation comporte lors de l'occurrence de ladite session d'activité suivante en présence dudit indicateur binaire (Si) ayant la deuxième valeur, la mise en oeuvre de l'étape a) et de l'étape b) pour l'indicateur binaire de rang le plus petit et ayant la deuxième valeur.

5. Procédé selon la revendication 3 ou 4, dans lequel ladite comptabilisation comporte en outre lorsque la durée d'une session d'activité courante est inférieure au premier seuil (TSI), le maintien de l'indicateur binaire considéré à sa première valeur pendant une durée de maintien choisie.

6. Procédé selon la revendication 5, dans lequel lorsque la première valeur a été attribuée à deux indicateurs binaires de rangs successifs, on maintient l'indicateur binaire de rang le plus faible à sa première valeur pendant une durée de maintien (TS1) expirant à l'issue d'une durée résiduelle après que l'autre indicateur binaire a repris la deuxième valeur.

7. Procédé selon l'une des revendications précédentes prise en combinaison avec la revendication 2, dans lequel chaque session d'activité comporte une séquence d'amorçage précédant une séquence de travail, et dans lequel dans le deuxième mode de fonctionnement, on force la durée de la séquence d'amorçage à une valeur supérieure à celle de la séquence d'amorçage dans le premier mode de fonctionnement.

8. Procédé selon les revendications 3 et 7, dans lequel on augmente la durée (TAMR) de chaque nouvelle séquence d'amorçage au fur et à mesure de l'augmentation, au-delà du deuxième seuil (TH1), du nombre d'indicateurs binaires ayant ladite première valeur.

9. Procédé selon l'une des revendications précédentes, comportant un stockage dans une mémoire non volatile (NVM), du nombre de sessions d'activité ayant une durée inférieure au premier seuil.

10. Procédé selon la revendication 9, comportant un stockage dans une mémoire non volatile électriquement programmable et effaçable (NVM), du nombre de sessions d'activité ayant une durée inférieure au premier seuil.

11. Procédé selon l'une des revendications précédentes, dans lequel le dispositif électronique est une carte à microcircuit (SMC).

12. Procédé selon la revendication 11, dans lequel la carte à microcircuit (SMC) est utilisée dans un système du télévision payante.

13. Dispositif électronique, comportant des moyens de traitement (MTR) configurés pour fonctionner au cours de sessions d'activité débutant chacune par l'occurence d'un signal d'initialisation (RST) du dispositif, **caractérisé en ce qu'**il comprend des moyens de contrôle (MCTL) configurés pour comptabiliser, à partir d'un instant initial, le nombre de sessions d'activité ayant une durée inférieure à un premier seuil, des moyens de stockage (NVM) configuré pour stocker au moins une information représentative du nombre de sessions d'activité ayant une durée inférieure à un premier seuil, et des moyens de comparaison (CMP) configurés pour comparer ledit nombre de sessions avec un deuxième seuil.

14. Dispositif selon la revendication 13, dans lequel les moyens de traitement (MTR) sont configurés pour fonctionner dans un premier mode de fonctionnement au cours des sessions d'activité, le dispositif comprenant en outre des moyens de commande (MCMP) configurés pour faire passer les moyens de traitement dans au moins un deuxième mode de fonctionnement différent du premier mode de fonctionnement si ledit nombre de sessions est supérieur à un deuxième seuil.

15. Dispositif selon la revendication 13 ou 14, dans lequel les moyens de contrôle (MCTL) comportent
des moyens de gestion (MG) configurés pour :
lors de l'occurrence d'une session d'activité courante à ou après ledit instant initial,
a) attribuer une première valeur à un indicateur binaire, et
b) si ladite session d'activité courante a une durée supérieure ou égale au premier seuil, maintenir la première valeur pour ledit indicateur binaire au cours de ladite session d'activité courante pendant une durée égale au premier seuil puis attribuer une deuxième valeur audit indicateur binaire, et si ladite session d'activité courante a une durée inférieure au premier seuil, maintenir la première valeur pour ledit indicateur binaire après la fin de la session d'activité courante et au moins jusqu'à l'occurrence de la session d'activité suivante,
lors de l'occurrence de la session d'activité suivante en présence dudit indicateur binaire ayant ladite première valeur, attribuer la première valeur à un nouvel indicateur binaire de rang supérieur au rang dudit indicateur binaire, et
ladite information comportant lesdits indicateurs binaires (Si), et
les moyens de contrôle (MCTL) comportent en outre des moyens de comptage (CPT) configurés pour compter le nombre d'indicateurs binaires ayant ladite première valeur.

16. Dispositif selon la revendication 15, dans lequel les moyens de gestion (MG) sont configurés pour lors de l'occurrence de ladite session d'activité suivante en présence dudit indicateur binaire ayant la deuxième valeur, mettre en oeuvre l'étape a) et l'étape b) pour l'indicateur binaire de rang le plus petit et ayant la deuxième valeur.

17. Dispositif selon l'une des revendications 15 ou 16, dans lequel les moyens de gestion (MG) sont en outre configurés pour, lorsque la durée d'une session d'activité courante est inférieure au premier seuil, maintenir l'indicateur binaire considéré à sa première valeur pendant une durée de maintien choisie.

18. Dispositif selon la revendication 17, dans lequel lorsque la première valeur a été attribuée à deux indicateurs binaires de rangs successifs, les moyens de gestion (MG) sont configurés pour maintenir l'indicateur binaire de rang le plus petit à sa première valeur pendant une durée de maintien expirant à l'issue d'une durée résiduelle après que l'autre indicateur binaire a repris la deuxième valeur.

19. Dispositif selon l'une des revendications 13 à 18 prise en combinaison avec la revendication 14, dans lequel chaque session d'activité comporte une séquence d'amorçage précédant une séquence de travail, et dans lequel dans le deuxième mode de fonctionnement, les moyens de commande (MCMP) sont configurés pour forcer la durée (TAMR) de la séquence d'amorçage à une valeur supérieure à celle de la séquence d'amorçage dans le premier mode de fonctionnement.

20. Dispositif selon les revendications 15 et 19, dans lequel les moyens de commande (MCMP) sont configurés pour augmenter la durée de chaque nouvelle séquence d'amorçage au fur et à mesure de l'augmentation, au-delà du deuxième seuil, du nombre d'indicateurs binaires ayant ladite première valeur.

21. Dispositif selon l'une des revendications 13 à 20, dans lequel les moyens de stockage comportent une mémoire non volatile (NVM).

22. Dispositif selon la revendication 21, dans lequel la mémoire non volatile est une mémoire non volatile électriquement programmable et effaçable (NVM).

23. Dispositif selon l'une des revendications 13 à 22, formant une carte à microcircuit (SMC).

24. Dispositif selon l'une des revendications 13 à 23, formant une carte à microcircuit (SMC) destinée à être utilisée dans un système de télévision payante.

## Patentansprüche

1. Verfahren zur Erkennung eines potentiell suspekten Betriebs eines elektronischen Geräts, das derart konfiguriert ist, dass es während Aktivitätssitzungen funktioniert, die jeweils mit dem Auftreten eines Initialisierungssignals (RST) des Geräts beginnen, umfassend innerhalb des Geräts eine Abrechnung der Anzahl von Aktivitätssitzungen mit einer kürzeren Dauer als eine erste Schwelle (TS1) ausgehend von einem Anfangszeitpunkt und einen Vergleich dieser Anzahl mit einer zweiten Schwelle (TH1).

2. Verfahren nach Anspruch 1, ferner umfassend, wobei das Gerät derart konfiguriert ist, dass es in einem ersten Betriebsmodus während der Aktivitätssitzungen funktioniert, einen Übergang des Geräts in mindestens einen zweiten, zum ersten Betriebsmodus unterschiedlichen Betriebsmodus, wenn die Anzahl von Sitzungen größer als eine zweite Schwelle (TH1) ist.

3. Verfahren nach Anspruch 1 oder 2, bei dem die Abrechnung Folgendes umfasst:
beim Auftreten einer laufenden Aktivitätssitzung zu oder nach dem Anfangszeitpunkt:
a) eine Zuteilung eines ersten Werts zu einem Binärindikator (Si), und
b) wenn die laufende Aktivitätssitzung eine Dauer größer oder gleich einer ersten Schwelle (TS1) hat, Beibehaltung des ersten Werts für den Binärindikator während der laufenden Aktivitätssitzung während einer Dauer gleich der ersten Schwelle, dann Zuteilung eines zweiten Werts zu dem Binärindikator, und wenn die laufende Aktivitätssitzung eine Dauer kürzer als die erste Schwelle (TS1) hat, Beibehaltung des ersten Werts für den Binärindikator (Si) nach dem Ende der laufenden Aktivitätssitzung und mindestens bis zum Auftreten der folgenden Aktivitätssitzung,
beim Auftreten der folgenden Aktivitätssitzung in Gegenwart des Binärindikators (Si) mit dem ersten Wert eine Zuteilung des ersten Werts zu einem neuen Binärindikator (Si+1) von höherem Rang als der Rang des Binärindikators, und
eine Bestimmung der Anzahl von Binärindikatoren (Si) mit dem ersten Wert.

4. Verfahren nach Anspruch 3, bei dem die Abrechnung beim Auftreten der folgenden Aktivitätssitzung in Gegenwart des Binärindikators (Si) mit dem zweiten Wert den Einsatz des Schrittes a) und des Schrittes b) für den Binärindikator des niedrigsten Ranges, der den zweiten Wert besitzt, umfasst.

5. Verfahren nach Anspruch 3 oder 4, bei dem die Abrechnung ferner, wenn die Dauer einer laufenden Aktivitätssitzung kürzer als die erste Schwelle (TS1) ist, die Beibehaltung des betreffenden Binärindikators auf seinem ersten Wert während einer ausgewählten Beibehaltungsdauer umfasst.

6. Verfahren nach Anspruch 5, bei dem, wenn der erste Wert zwei Binärindikatoren von aufeinander folgenden Rängen zugeordnet wurde, der Binärindikator des niedrigsten Ranges auf seinem ersten Wert während einer Beibehaltungsdauer (TS1) beibehalten wird, die nach Ablauf einer Restdauer, nachdem der Binärindikator wieder den zweiten Wert angenommen hat, endet.

7. Verfahren nach einem der vorhergehenden Ansprüche in Kombination mit Anspruch 2, bei dem jede Aktivitätssitzung eine Anlaufsequenz umfasst, die einer Arbeitssequenz vorangestellt ist, und bei dem im zweiten Betriebsmodus die Dauer der Anlaufsequenz auf einen größeren Wert als jener der Anlaufsequenz im ersten Betriebsmodus gestellt wird.

8. Verfahren nach den Ansprüchen 3 und 7, bei dem die Dauer (TAMR) jeder neuen Anlaufsequenz im Zuge der Erhöhung der Anzahl von Binärindikatoren mit dem ersten Wert über den zweiten Schwellenwert (TH1) erhöht wird.

9. Verfahren nach einem der vorhergehenden Ansprüche, umfassend eine Speicherung der Anzahl von Aktivitätssitzungen mit einer kürzeren Dauer als die erste Schwelle in einem Festspeicher (NVM).

10. Verfahren nach Anspruch 9, umfassend eine Speicherung der Anzahl von Aktivitätssitzungen mit einer kürzeren Dauer als die erste Schwelle in einem elektrisch programmierbaren und löschbaren Festspeicher (NVM).

11. Verfahren nach einem der vorhergehenden Ansprüche, bei dem das elektronische Gerät eine SMC-Karte ist.

12. Verfahren nach Anspruch 11, bei dem die SMC-Karte in einem Pay-TV-System verwendet wird.

13. Elektronisches Gerät, umfassend Verarbeitungsmittel (MTR), die derart konfiguriert sind, dass sie während Aktivitätssitzungen funktionieren, die jeweils mit dem Auftreten eines Initialisierungssignals (RST) des Geräts beginnen, **dadurch gekennzeichnet, dass** es Kontrollmittel (MCTL), die derart konfiguriert sind, dass sie ausgehend von einem Anfangszeitpunkt die Anzahl von Aktivitätssitzungen mit einer kürzeren Dauer als eine erste Schwelle abrechnen, Speichermittel (NVM), die derart konfiguriert sind, dass sie mindestens eine Information, die die Anzahl der Aktivitätssitzungen mit einer kürzeren Dauer als eine erste Schwelle darstellt, speichern und Vergleichsmittel (CMP) umfasst, die derart konfiguriert sind, dass sie die Anzahl von Sitzungen mit einer zweiten Schwelle vergleichen.

14. Gerät nach Anspruch 13, bei dem die Verarbeitungsmittel (MTR) derart konfiguriert sind, dass sie in einem ersten Betriebsmodus während der Aktivitätssitzungen funktionieren, wobei das Gerät ferner Steuerungsmittel (MCMP) umfasst, die derart konfiguriert sind, dass sie die Verarbeitungsmittel in mindestens einen zweiten, zum ersten Betriebsmodus unterschiedlichen Betriebsmodus übergehen lassen, wenn die Anzahl von Sitzungen größer als eine zweite Schwelle ist.

15. Gerät nach Anspruch 13 oder 14, bei dem die Kontrollmittel (MCTL) Folgendes umfassen:
Verwaltungsmittel (MG), die derart konfiguriert sind, dass
beim Auftreten einer laufenden Aktivitätssitzung zu oder nach dem Anfangszeitpunkt:
a) eine Zuteilung eines ersten Werts zu einem Binärindikator erfolgt, und
b) wenn die laufende Aktivitätssitzung eine Dauer größer oder gleich der ersten Schwelle hat, der erste Wert für den Binärindikator während der laufenden Aktivitätssitzung während einer Dauer gleich der ersten Schwelle beibehalten wird, dann ein zweiter Wert dem Binärindikator zugeteilt wird, und wenn die laufende Aktivitätssitzung eine Dauer kürzer als die erste Schwelle hat, der erste Wert für den Binärindikator nach dem Ende der laufenden Aktivitätssitzung und mindestens bis zum Auftreten der folgenden Aktivitätssitzung beibehalten wird,
beim Auftreten der folgenden Aktivitätssitzung in Gegenwart des Binärindikators mit dem ersten Wert eine Zuteilung des ersten Werts zu einem neuen Binärindikator von höherem Rang als der Rang des Binärindikators erfolgt, und
wobei die Information die Binärindikatoren (Si) umfasst, und
die Kontrollmittel (MCTL) ferner Zählmittel (CPT) umfassen, die derart konfiguriert sind, dass sie die Anzahl von Binärindikatoren mit dem ersten Wert zählen.

16. Gerät nach Anspruch 15, bei dem die Verwaltungsmittel (MG) derart konfiguriert sind, dass sie beim Auftreten der folgenden Aktivitätssitzung in Gegenwart des Binärindikators mit dem zweiten Wert den Schritt a) und den Schritt b) für den Binärindikator des niedrigsten Ranges mit dem zweiten Wert einsetzen.

17. Gerät nach einem der Ansprüche 15 oder 16, bei dem die Verwaltungsmittel (MG) ferner derart konfiguriert sind, dass sie, wenn die Dauer einer laufenden Aktivitätssitzung kürzer als die erste Schwelle ist, den betreffenden Binärindikator auf seinem ersten Wert während einer ausgewählten Beibehaltungsdauer beibehalten.

18. Gerät nach Anspruch 17, bei dem, wenn der erste Wert zwei Binärindikatoren von aufeinander folgendem Rang zugeteilt wurde, die Verwaltungsmittel (MG) derart konfiguriert sind, dass sie den Binärindikator des niedrigsten Ranges auf seinem ersten Wert während einer Beibehaltungsdauer, die nach Ablaufen einer Restdauer, nachdem der andere Binärindikator wieder den zweiten Wert angenommen hat, endet, beibehalten.

19. Gerät nach einem der Ansprüche 13 bis 18 in Kombination mit Anspruch 14, bei dem jede Aktivitätssitzung eine Anlaufsequenz umfasst, die einer Arbeitssequenz vorangestellt ist, und bei dem im zweiten Betriebsmodus die Steuerungsmittel (MCMP) derart konfiguriert sind, dass sie die Dauer (TAMR) der Anlaufsequenz auf einen größeren Wert als jener der Anlaufsequenz im ersten Betriebsmodus stellen.

20. Gerät nach den Ansprüchen 15 und 19, bei dem die Steuerungsmittel (MCMP) derart konfiguriert sind, dass sie die Dauer jeder neuen Anlaufsequenz im Zuge der Erhöhung der Anzahl von Binärindikatoren mit dem ersten Wert über den zweiten Schwellenwert erhöhen.

21. Gerät nach einem der Ansprüche 13 bis 20, bei dem die Speichermittel einen Festspeicher (NVM) umfassen.

22. Gerät nach Anspruch 21, bei dem der Festspeicher ein elektrisch programmierbarer und löschbarer Festspeicher (NVM) ist.

23. Gerät nach einem der Ansprüche 13 bis 22, das eine SMC-Karte bildet.

24. Gerät nach einem der Ansprüche 13 bis 23, das eine SMC-Karte bildet, die dazu bestimmt ist, in einem Pay-TV-System verwendet zu werden.

## Claims

1. Method for detecting potentially suspicious operation of an electronic device configured to operate in the course of activity sessions each starting with the occurrence of an initialization signal (RST) for the device, comprising within the device, a metering, from an initial instant, of the number of activity sessions having a duration below a first threshold (TS1), and a comparison of this number with a second threshold (TH1).

2. Method according to Claim 1, furthermore comprising, the device being configured to operate in a first mode of operation in the course of the said activity sessions, a switching of the device to at least one second mode of operation different from the first mode of operation if the said number of sessions is above a second threshold (TH1).

3. Method according to Claim 1 or 2, in which the said metering comprises:
upon the occurrence of a current activity session at or after the said initial instant,
a) an allocating of a first value to a binary indicator (Si), and
b) if the said current activity session has a duration above or equal to the first threshold (TS1), the holding of the first value for the said binary indicator in the course of the said current activity session for a duration equal to the first threshold and then the allocating of a second value to the said binary indicator, and if the said current activity session has a duration below the first threshold (TS1), the holding of the first value for the said binary indicator (Si) after the end of the current activity session and at least until the occurrence of the following activity session,
upon the occurrence of the following activity session in the presence of the said binary indicator (Si) having the said first value, an allocating of the first value to a new binary indicator (Si+1) of higher rank than the rank of the said binary indicator, and
a determination of the number of binary indicators (Si) having the said first value.

4. Method according to Claim 3, in which the said metering comprises upon the occurrence of the said following activity session in the presence of the said binary indicator (Si) having the second value, the implementation of step a) and of step b) for the binary indicator of smallest rank and having the second value.

5. Method according to Claim 3 or 4, in which the said metering furthermore comprises when the duration of a current activity session is below the first threshold (TS1), the holding of the binary indicator considered at its first value for a chosen holding duration.

6. Method according to Claim 5, in which when the first value has been allocated to two binary indicators of successive ranks, the binary indicator of lowest rank is held at its first value for a holding duration (TS1) expiring on completion of a residual duration after the other binary indicator has retaken the second value.

7. Method according to one of the preceding claims taken in combination with Claim 2, in which each activity session comprises a startup sequence preceding a working sequence, and in which in the second mode of operation, the duration of the startup sequence is forced to a value above that of the startup sequence in the first mode of operation.

8. Method according to Claims 3 and 7, in which the duration (TAMR) of each new startup sequence is increased as the number of binary indicators having the said first value increases beyond the second threshold (TH1).

9. Method according to one of the preceding claims, comprising a storage in a nonvolatile memory (NVM), of the number of activity sessions having a duration below the first threshold.

10. Method according to Claim 9, comprising a storage in an electrically programmable and erasable nonvolatile memory (NVM), of the number of activity sessions having a duration below the first threshold.

11. Method according to one of the preceding claims, in which the electronic device is a microcircuit card (SMC).

12. Method according to Claim 11, in which the microcircuit card (SMC) is used in a pay television system.

13. Electronic device, comprising processing means (MTR) configured to operate in the course of activity sessions each starting with the occurrence of an initialization signal (RST) for the device, **characterized in that** it comprises monitoring means (MCTL) configured to meter, from an initial instant, the number of activity sessions having a duration below a first threshold, storage means (NVM) configured to store at least one cue representative of the number of activity sessions having a duration below a first threshold, and comparison means (CMP) configured to compare the said number of sessions with a second threshold.

14. Device according to Claim 13, in which the processing means (MTR) are configured to operate in a first mode of operation in the course of the activity sessions, the device furthermore comprising control means (MCMP) configured to switch the processing means to at least one second mode of operation different from the first mode of operation if the said number of sessions is above a second threshold.

15. Device according to Claim 13 or 14, in which the monitoring means (MCTL) comprise
management means (MG) configured to:
upon the occurrence of a current activity session at or after the said initial instant,
a) allocate a first value to a binary indicator, and
b) if the said current activity session has a duration above or equal to the first threshold, hold the first value for the said binary indicator in the course of the said current activity session for a duration equal to the first threshold and then allocate a second value to the said binary indicator, and if the said current activity session has a duration below the first threshold, hold the first value for the said binary indicator after the end of the current activity session and at least until the occurrence of the following activity session,
upon the occurrence of the following activity session in the presence of the said binary indicator having the said first value, allocate the first value to a new binary indicator of higher rank than the rank of the said binary indicator, and
the said cue comprising the said binary indicators (Si), and
the monitoring means (MCTL) furthermore comprise counting means (CPT) configured to count the number of binary indicators having the said first value.

16. Device according to Claim 15, in which the management means (MG) are configured to, upon the occurrence of the said following activity session in the presence of the said binary indicator having the second value, implement step a) and step b) for the binary indicator of smallest rank and having the second value.

17. Device according to either of Claims 15 and 16, in which the management means (MG) are furthermore configured to, when the duration of a current activity session is below the first threshold, hold the binary indicator considered at its first value for a chosen holding duration.

18. Device according to Claim 17, in which when the first value has been allocated to two binary indicators of successive ranks, the management means (MG) are configured to hold the binary indicator of smallest rank at its first value for a holding duration expiring on completion of a residual duration after the other binary indicator has retaken the second value.

19. Device according to one of Claims 13 to 18 taken in combination with Claim 14, in which each activity session comprises a startup sequence preceding a working sequence, and in which in the second mode of operation, the control means (MCMP) are configured to force the duration (TAMR) of the startup sequence to a value above that of the startup sequence in the first mode of operation.

20. Device according to Claims 15 and 19, in which the control means (MCMP) are configured to increase the duration of each new startup sequence as the number of binary indicators having the said first value increases beyond the second threshold.

21. Device according to one of Claims 13 to 20, in which the storage means comprise a nonvolatile memory (NVM).

22. Device according to Claim 21, in which the nonvolatile memory is an electrically programmable and erasable nonvolatile memory (NVM).

23. Device according to one of Claims 13 to 22, forming a microcircuit card (SMC).

24. Device according to one of Claims 13 to 23, forming a microcircuit card (SMC) intended to be used in a pay television system.
